# EUROPEAN PATENT APPLICATION

(11) **EP 3 115 993 A1**
(43) Date of publication of application: **11.01.2017**
(21) Application number: 15306134.6
(22) Date of filing: 09.07.2015
(51) Int. Cl.: G11B 27/031, G11B 27/28, H04N 1/60, H04N 9/64

(54) **METHOD AND DEVICE FOR PROCESSING COLORS OF A VIDEO SEQUENCE**

(71) Applicant: Thomson Licensing, 92130 Issy-les-Moulineaux (FR)
(72) Inventor: AUTIER, Ingrid, 35576 Cesson-Sévigné (FR); SABATER, Neus, 35576 Cesson-Sévigné (FR); DEMOULIN, Vincent, 35576 Cesson-Sévigné (FR); HELLIER, Pierre, 35576 Cesson-Sévigné (FR)
(74) Representative: Huchet, Anne

(57) **Abstract**

The invention relates to a method for processing the colors of video segments comprising the steps of:
a) selecting (S3) an example image for a reference segment;
b) computing (S4) a reference color transformation, based on the key frame of the reference segment and the example image;
c) for at least one of the video segments different from the reference segment, computing (S5) a subsidiary color transformation based on the key frame of the video segment and the example image;
d) computing (S6), for each subsidiary color transformation, a distance between the reference color transformation and the subsidiary color transformation;
e) determining (S7) the video segments, called close video segments, having a subsidiary color transformation of which the computed distance is lower than a threshold; and
f) applying (S8) a color transformation based on the reference color transformation and/or the subsidiary color transformations to the reference segment and the close video segments.

## Description

### 1. Technical Field

The present invention relates generally to the field of video editing and more specifically to color processing for video editing.

### 2. Background Art

Video editing softwares like Final Cut Pro ™, Avid ™ and Adobe After Effects ™ provide for tools to edit and transform video sequences. In such software, the user imports video clips, and then edition starts, with trimming, splitting, sorting or arranging video clips on the timeline. On each video clip, the user can apply one or more video filters, also called effects, which implement video processing algorithms. These algorithms may be as simple as manual control of color or brightness, but also more complex like automatic skin smoothing.

In order to simplify video edition, some tools implement a shot detector, also called scene change detection, so that the user can easily apply different filters with customized parameters for each scene.

Some tools already implement a color transformation feature (IMovie or adobe premier for instance). For these tools, an example is selected for each shot, and the color of that shot is deformed so as to match the colors of the example. A limitation of such an approach is that this process has to be repeated for each shot and is very time consuming.

There is a need for performing more rapidly color processing on video sequences.

### 3. Summary of Invention

According to the invention, it is proposed to determine, in the video sequence to be processed, coherent video segments in the sense of color transformation and to process the video sequence by groups of coherent video segments.

The present invention relates to a method for processing the colors of a plurality of video segments, a key frame being associated to each video segment, said key frame being representative of the video segment, said method comprising the steps of:
a) selecting a first example image for a first video segment, called first reference segment;
b) computing a color transformation, called first reference color transformation, based on the key frame associated to the first reference segment and the first example image, said first reference color transformation being adapted to transform the colors of the first reference segment according to the color palette of the first example image;
c) for at least one of the video segments different from the first reference segment, computing a color transformation, called subsidiary color transformation, based on the key frame associated to said video segment and the first example image;
d) computing, for each subsidiary color transformation, a distance between the first reference color transformation and the subsidiary color transformation;
e) determining the video segments, called close video segments, having a subsidiary color transformation of which the computed distance is lower than a predetermined threshold; and
f) applying a color transformation based on the first reference color transformation and/or the subsidiary color transformations to the first reference segment and the close video segments.

Thus, all the video segments close to the first reference segment in the sense of the color transformation are grouped together and color transformations derived from a unique example image are applied to this group of segments.

In a first embodiment, the color transformation applied to the first reference segment is the first reference color transformation and the color transformation applied to each close video segment is the corresponding subsidiary color transformation.

In a second embodiment, the color transformation applied to the first reference segment and to the close video segments is the first reference color transformation.

In a third embodiment, a composite color transformation based on the first reference color transformation and the subsidiary color transformations is computed and is applied to at least the close video segments. In this embodiment, this composite color transformation can also be applied to the first reference segment. In a variant, the first reference color transformation is applied to the first reference segment.

In a specific embodiment, the first reference segment and the first example image are selected by a user in step a).

Advantageously, if the number of close video segments is lower than a predefined number in step e), a new threshold higher than the predetermined threshold is defined in order to obtain a number of close video segments equal to or greater than the predefined number.

According to a specific embodiment, the method further comprises the steps of:
g) selecting a second example image for a second video segment, called second reference segment, said second reference segment being selected among the video segments other than the first reference segment and the close video segments, and
h) reiterating the steps b) to f) with said second reference segment.

According to a specific embodiment, the video segments belong to a same video sequence and are generated by applying a shot detection on the video sequence.

According to a specific embodiment, the key frame of a video segment is a frame extracted from said video segment.

In a variant, the key frame of a video segment is an artificial frame built from frames of said video segment.

The invention also concerns a device configured for processing the colors of a plurality of video segments, a key frame being associated to each video segment, said key frame being representative of the video segment, wherein the device comprises at least one processor configured for:
- selecting a first example image for a first video segment, called first reference segment;
- computing a color transformation, called first reference color transformation, based on the key frame of the first reference segment and the first example image, said first reference color transformation being adapted to transform the colors of the first reference segment according to the color palette of the first example image;
- for at least one of the video segments different from the first reference segment, computing a color transformation, called subsidiary color transformation, based on the key frame of said video segment and the first example image;
- computing, for each subsidiary color transformation, a distance between the first reference color transformation and the subsidiary color transformation;
- determining the video segments, called close video segments, having a subsidiary color transformation of which the computed distance is lower than a predetermined threshold; and
- applying a color transformation based on the first reference color transformation and/or the subsidiary color transformations to the first reference segment and the close video segments.

The invention also concerns a computer program product, characterized in that it comprises instructions of program code for executing steps of the method as defined before, when said program is executed on a computer.

Some steps of the above mentioned method can also be used for classifying a plurality of video segments. Thus the invention also concerns a method for organizing a plurality of video segments into groups of video segments, a key frame being associated to each video segment, said key frame being representative of the video segment, said method comprising the steps of:
a) selecting a first example image for a first video segment, called first reference segment;
b) computing a color transformation, called first reference color transformation, based on the key frame associated to the first reference segment and the first example image, said first reference color transformation being adapted to transform the colors of the first reference segment according to the color palette of the first example image;
c) for at least one of the video segments different from the first reference segment, computing a color transformation, called subsidiary color transformation, based on the key frame associated to said video segment and the first example image;
d) computing, for each subsidiary color transformation, a distance between the first reference color transformation and the subsidiary color transformation;
e) grouping the first reference segment and the video segments, called close video segments, having a subsidiary color transformation of which the computed distance is lower than a predetermined threshold.

In a specific embodiment, the first reference segment and the first example image are selected by a user in step a).

Advantageously, if the number of close video segments is lower than a predefined number in step e), a new threshold higher than the predetermined threshold is defined in order to obtain a number of close video segments equal to or greater than the predefined number.

According to a specific embodiment, the method further comprises the steps of:
f) selecting a second example image for a second video segment, called second reference segment, said second reference segment being selected among the video segments other than the first reference segment and the close video segments, and
g) reiterating the steps b) to e) with said second reference segment.

According to a specific embodiment, the key frame of a video segment is a frame extracted from said video segment.

In a variant, the key frame of a video segment is an artificial frame built from frames of said video segment.

### 4. Brief description of the drawings

The invention can be better understood with reference to the following description and drawings, given by way of example and not limiting the scope of protection, and in which:
- Fig.1 is a flow chart of the successive steps implemented when performing a method according to an embodiment of the invention;
- Figs.2 to 5 are print screens of a user interface of a software implementing the method illustrated by Fig.1;
- Fig.6 is a schematic view of an exemplary architecture of a device for implementing the method illustrated by Fig.1.

### 5. Description of embodiments

The invention will be described in reference to a particular and not limited to one embodiment of a method for processing colors of video segments belonging or not to a same video sequence. The video segments and the video sequence comprise any kind of video frames. It should be understood that there is no intent to limit example embodiments to the particular one disclosed, but to cover all modifications, equivalents, and alternatives falling within the scope of the claims.

Before discussing the example embodiment in more details, it is noted that the example embodiment is described as a process or method depicted as a flowchart. Although the flowchart describes the operations as sequential processes, many of the operations may be performed in parallel, concurrently or simultaneously. In addition, the order of operations may be re-arranged. The processes may be terminated when their operations are completed, but may also have additional steps not included in the figures. The process may correspond to method, function, procedure, subroutine, subprogram, etc.

The method discussed below may be implemented by hardware, software, firmware, middleware, microcode, hardware description languages, or any combination thereof. When implemented in software, firmware, middleware or microcode, the program code or code segments to perform the necessary tasks may be stored in a machine or computer readable medium such as a storage medium. A processor(s) may perform the necessary tasks. Specific structural and functional details disclosed herein are merely representative for purposes of describing example embodiments of the present invention. This invention may, however, be embodied in many alternate forms and should not be construed as limited to only the embodiments set forth herein.

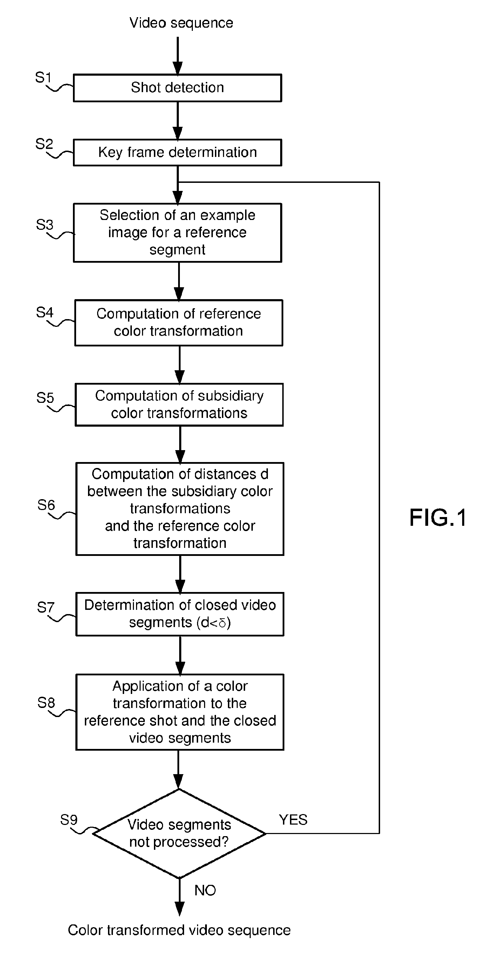

The method according to the invention will be described in reference to Figs.1 to 5. In these figures, the method is applied to a video sequence. The two first steps of this method consist in generating video segments from the video sequence and generating a key frame for each video segment. Of course, the method may be directly applied on video segments having key frames. In that case, the two first steps are not implemented.

In reference to Fig.1 the method according to the invention comprises a first step, S1, wherein the video segments are generated by applying a shot detection (or scene change detection) on the video sequence. In this step, the video sequence is thus divided into video segments or shots. Shot detection algorithms based on color difference histograms or based on the edge change ratio can be used for this step. Such algorithms are for example presented and compared in "Comparison of Automatic Shot Boundary Detection Algorithms" R. Lienhart, Proc. SPIE 3656, Storage and Retrieval for Image and Video Databases VII, 17 December 1998. The shots resulting from these algorithms are typically composed of sequential frames with same color features.

At the end of this step, the successive shots detected by the algorithm can be displayed along a timeline.

In a next step, S2, a key frame is determined for each detected video segment. This key frame must be representative of the associated video segment. The key frame of a video segment may be a frame extracted from the video segment or an artificial frame built from frames of the video segment. Examples of key frame extractions may be found in "Adaptive key frame extraction using unsupervised clustering" Y.Zhuang, Y.Rui, T.S.Huang, S.Mehrotra, International Conference on Image Processing, 1998. In a variant, more than one key frame can be determined for each video segment. The algorithm can eventually output several key frames and the user select the most representative one in terms of color features. In a variant, a composite key frame is generated based on this plurality of key frames.

In a next step, S3, a first example image is selected for a first video segment, called first reference segment. This selection can be done by the user. The user selects firstly then first reference segment and then selects the first example image among the example images of a library or a cluster. This example image is chosen by the user as a function of its color features. The user selects an example image including the color features that he desires to apply to the first reference shot. The user can be a professional or a non-professional user. In the case of a professional one, for example a colourist, he selects the example images and the reference shots in order to amend the colors of the video sequence in accordance with editing rules in order to give the desired atmosphere to the shots. In the case of a non-professional user, he will do the same according his own editing rules.

In a next step, S4, a color transformation, called first reference color transformation, is computed based on the key frame associated to the first reference segment and the first example image. This first reference color transformation is adapted to transform the colors of the first reference segment according to the color palette of the first example image. The color transformation (also called color transfer) is for instance an example-based Chromatic Adaptation Transform (CAT) or a color transfer based on automatic color palette associations or other color transfers disclosed in "Optimal Transportation for Example-Guided Color Transfer", O.Figo, N.Sabater, V.Demoulin, P.Hellier, Computer Vision ACCV 2014.

In a next step, S5, a color transformation, called subsidiary color transformation, is computed for at least one of the video segments different from the first reference segment. Each subsidiary color transformation is computed by the same process as for the step S4. It is computed based on the key frame associated to the considered video segment and the first example image;

In a next step, S6, for each subsidiary color transformation, a distance d between the first reference color transformation and the subsidiary color transformation is computed. In this step, distances between color transformations are computed. A typical distance is an Euclidean distance, for example the distance L².

In a next step, S7, video segments, called close video segments, having a subsidiary color transformation of which the computed distance d is lower than a predetermined threshold δ are determined.

In a next step, S8, a color transformation based on the first reference color transformation and/or the subsidiary color transformations is applied to the first reference segment and the close video segments. Thus, all the video segments close to the first reference segment in the sense of the color transformation are grouped together and color transformations derived from a unique example image (the first example image) are applied to this group (or cluster) of video segments.

In a first embodiment, the first color transformation computed at step S4 is applied to the first reference segment and the subsidiary color transformations computed at step S5 are applied to the close video segment.

In a variant, the first reference color transformation computed at step S4 is applied to all the video segments of the group, i.e. the first reference segment and to the close video segments.

In another variant, a composite color transformation is computed based on the first reference color transformation and the subsidiary color transformations and is applied to at least the close video segments. This composite color transformation can also be applied to the first reference segment. In a variant, the first reference color transformation is applied to the first reference segment.

Advantageously, if the number of close video segments is lower than a predefined number in step S7, a new threshold higher than the predetermined threshold is defined in order to obtain a number of close video segments equal to or greater than the predefined number. Inversely, if the user considers that the number of close video segments is too high, he can lower it in order to reduce this number.

The same steps S3 to S8 can be applied to the remaining video segments (not color transformed). At a step S9, it is tested if there are remaining video segments and, if so, the steps S3 to S8 are applied to them. In step S3, a second example image is selected for a second reference segment, the second reference segment being selected among the video segments other than the first reference segment and the close video segments. Then the steps S4 to S8 are applied from this second reference segment.

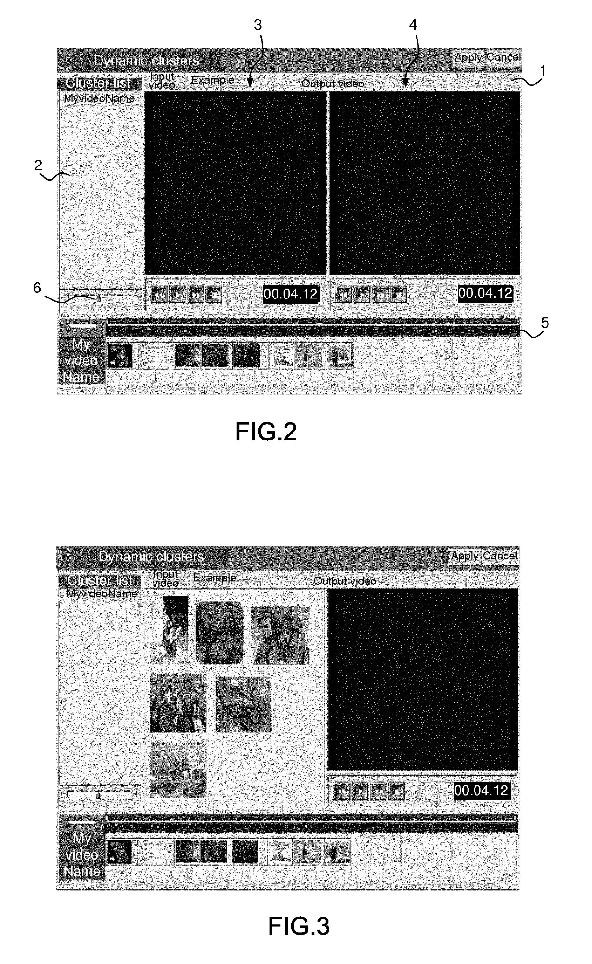

The above-mentioned method is illustrated by Figs.2 to 5. These figures show a user interface example of a software implementing the method of invention. The user interface is composed of the following elements:
- a menubar 1 with menus,
- a browser 2 to view the groups or clusters of video segments (or shots),
- an input viewer 3 to view input videos and example images,
- an output viewer 4 to view the resulting video after color transformation is applied, and
- a timeline 5.

The input viewer 3 and the output viewer 4 comprise play, pause, forward and rewind buttons. Apply/Cancel buttons are also provided at the top of the user interface in order to apply/cancel the color transformation. A slider 6 is also present to change the distance threshold δ.

The user can see in the browser all the video segments (or shots) of a specific group, the video segments being displayed in the browser by their representative key frame or by their name. Shots can be selected and played one at a time. All shots of a group can be played by selecting the cluster in the browser.

The timeline 5 is a classical timeline showing all shots in temporal order. When the user selects a shot in the timeline, all shots of the group containing the selected shots are highlighted.

In Fig.2, the video sequence of which the name is "MyVideoName" is segmented into shots and a key frame for each shot is displayed along the timeline 5.

In Fig.3, example images are displayed in the input viewer 4. They are displayed with large thumbnails in a specific frame. In a specific implementation, example images do not need to be located all in the same directory. The application may allow to add example images by selecting one or more files at a time in a specific directory.

The example image may be defined as an image file or as a frame in a video. In this case, the interface should provide for a video navigator to select the appropriate frame.

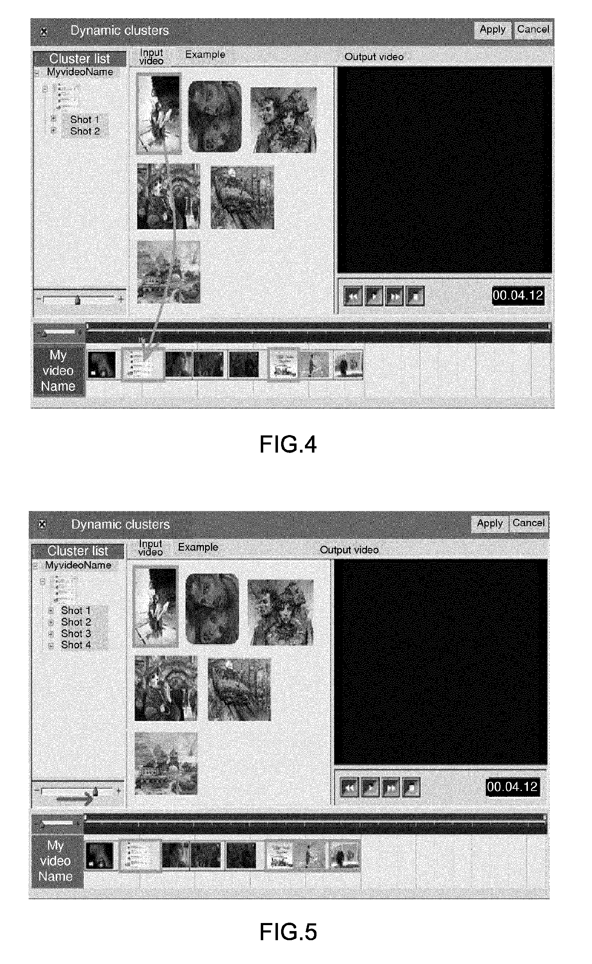

When the user wants to select an example image and associate it with a reference segment (reference shot), he can drag and drop the example thumbnail to the reference shot in the timeline. The steps S3 to S7 (Computation of the reference color transformation and of the subsidiary color transformations, computation of the distance d, determination of the closed video segments) are then executed. The cluster browser displays the resulting group of video segments with the reference segment on top and all the video segments of the group listed in temporal order as illustrated by Fig.4. All the video segments of the group are also highlighted in the timeline 5.

As visible on Fig.5, the user can use the slider 6 to change the distance threshold δ, which can change the list of video segments or shots in the groups. If this list is modified, this is visible in the browser 2 and in the timeline 5. After the threshold δ is set, the user can click on Apply button to start color transformation (step S8).

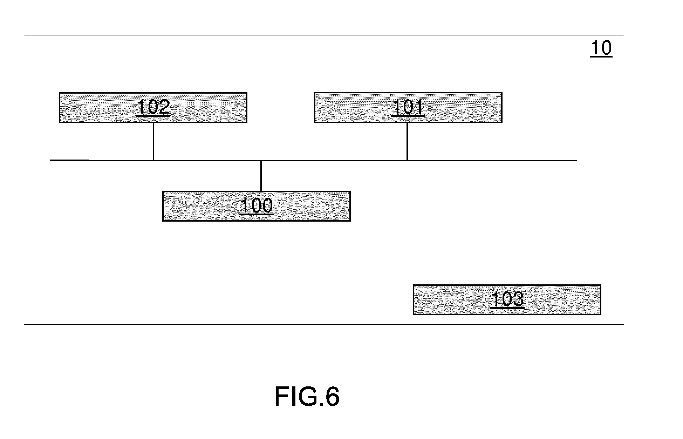

Fig.6 represents an exemplary architecture of the device 1 according to a specific and non-limitative embodiment of the invention. The processing device 10 comprises one or more processor(s) 100, which is(are), for example, a CPU, a GPU and/or a DSP (English acronym of Digital Signal Processor), along with internal memory 101 (e.g. RAM, ROM, EPROM). The processing device 10 comprises one or several Input/Output interface(s) 102 adapted to display output information and/or allow a user entering commands and/or data (e.g. a keyboard, a mouse, a touchpad, a webcam, a display); and a power source 103 which may be external to the processing device 10. The processing device 10 may also comprise network interface(s) (not shown). According to an exemplary and non-limitative embodiment of the invention, the processing device 10 further comprises a computer program stored in the memory 101. The computer program comprises instructions which, when executed by the processing device 10, in particular by the processor 100, make the processing device 10 carry out the processing method described in fig.1. According to a variant, the computer program is stored externally to the processing device 10 on a non-transitory digital data support, e.g. on an external storage medium such as a HDD, CD-ROM, DVD, a read-only and/or DVD drive and/or a DVD Read/Write drive, all known in the art. The processing device 10 thus comprises an interface to read the computer program. Further, the processing device 10 could access one or more Universal Serial Bus (USB)-type storage devices (e.g., "memory sticks.") through corresponding USB ports (not shown).

According to exemplary and non-limitative embodiments, the processing device 1 is a device, which belongs to a set comprising:
- a mobile device;
- a communication device;
- a game device;
- a tablet (or tablet computer);
- a laptop;
- a still picture camera;
- a video camera;
- a still picture server;
- a video server (e.g. a broadcast server, a video-on-demand server or a web server) ; and
- a video sharing platform.

## Claims

1. Method for processing the colors of a plurality of video segments, a key frame being associated to each video segment, said key frame being representative of the video segment, said method comprising the steps of:
a) selecting (S3) a first example image for a first video segment, called first reference segment;
b) computing (S4) a color transformation, called first reference color transformation, based on the key frame associated to the first reference segment and the first example image, said first reference color transformation being adapted to transform the colors of the first reference segment according to the color palette of the first example image;
c) for at least one of the video segments different from the first reference segment, computing (S5) a color transformation, called subsidiary color transformation, based on the key frame associated to said video segment and the first example image;
d) computing (S6), for each subsidiary color transformation, a distance between the first reference color transformation and the subsidiary color transformation;
e) determining (S7) the video segments, called close video segments, having a subsidiary color transformation of which the computed distance is lower than a predetermined threshold; and
f) applying (S8) a color transformation based on the first reference color transformation and/or the subsidiary color transformations to the first reference segment and the close video segments.

2. Method according to claim 1, wherein the color transformation applied to the first reference segment is the first reference color transformation and the color transformation applied to each close video segment is the corresponding subsidiary color transformation.

3. Method according to claim 1, wherein the color transformation applied to the first reference segment and to the close video segments is the first reference color transformation.

4. Method according to claim 1, wherein a composite color transformation based on the first reference color transformation and the subsidiary color transformations is computed and is applied to at least the close video segments.

5. Method according to any one of claims 1 to 4, wherein, in step a), the first reference segment and the first example image are selected by a user.

6. Method according to any one of claims 1 to 5, wherein, if the number of close video segments is lower than a predefined number in step e), a new threshold higher than the predetermined threshold is defined in order to obtain a number of close video segments equal to or greater than the predefined number.

7. Method according to any one of claims 1 to 6, wherein it further comprises the steps of:
g) selecting a second example image for a second video segment, called second reference segment, said second reference segment being selected among the video segments other than the first reference segment and the close video segments, and
h) reiterating the steps b) to f) with said second reference segment.

8. Method according to any one of claims 1 to 7, wherein the video segments belong to a same video sequence and are generated by applying a shot detection (S1) on the video sequence.

9. Method according to any one of claims 1 to 8, wherein the key frame associated to a video segment is a frame extracted from said video segment.

10. Method according to any one of claims 1 to 8, wherein the key frame associated to a video segment is an artificial frame built from frames of said video segment.

11. Device configured for processing the colors of a plurality of video segments, a key frame being associated to each video segment, said key frame being representative of the video segment, **characterized in that** the device comprises at least one processor configured for:
- selecting a first example image for a first video segment, called first reference segment;
- computing a color transformation, called first reference color transformation, based on the key frame of the first reference segment and the first example image, said first reference color transformation being adapted to transform the colors of the first reference segment according to the color palette of the first example image;
- for at least one of the video segments different from the first reference segment, computing a color transformation, called subsidiary color transformation, based on the key frame of said video segment and the first example image;
- computing, for each subsidiary color transformation, a distance between the first reference color transformation and the subsidiary color transformation;
- determining the video segments, called close video segments, having a subsidiary color transformation of which the computed distance is lower than a predetermined threshold; and
- applying a color transformation based on the first reference color transformation and/or the subsidiary color transformations to the first reference segment and the close video segments.

12. Computer program product, **characterized in that** it comprises instructions of program code for executing steps of the method according to one of claims 1 to 10, when said program is executed on a computer.
